# DEMANDE DE BREVET EUROPEEN

(11) **EP 1 652 760 A1**
(43) Date de publication de la demande: **03.05.2006**
(21) Numéro de dépôt: 05300614.4
(22) Date de dépôt: 22.07.2005
(51) Int. Cl.: B62D 65/14, B62D 25/14

(54) **Fixation de cockpit sur caisse**

(30) Priorité: 18.10.2004 FR 0410990
(71) Demandeur: Renault s.a.s., 92100 Boulogne Billancourt (FR)
(72) Inventeur: Perrin, Laurent, 78000, VERSAILLES (FR); Adam, Jean, 78120, RAMBOUILLET (FR); Chalot, Jérôme, 76310, SAINT ADRESSE (FR)

(57) **Abrégé**

Le véhicule comprend :
- une planche de bord ;
- des montants avant (6) ; et
- une traverse inférieure de baie (10),
la planche étant fixée aux montants (6) en étant positionnée d'une part sur la traverse (10) selon au moins une direction et d'autre part sur les montants (6) selon au moins une autre direction.

## Description

L'invention concerne la fixation de la planche de bord des véhicules automobiles.

Il est connu de fixer la planche de bord ou cockpit d'un véhicule automobile à la caisse en positionnant la planche sur la traverse inférieure de baie qui s'étend au-dessous du pare-brise, de l'un à l'autre de deux montants latéraux avant du véhicule. Préalablement à la fixation, la planche est guidée par insertion d'une pluralité de pions de la planche dans une pluralité de trous de la traverse. La fixation par vissage de la planche sur les montants est effectuée par l'intermédiaire d'au moins un centreur permettant le positionnement de la planche selon les trois dimensions.

Toutefois, cet agencement génère parfois un positionnement imprécis de la planche de bord par rapport à d'autres pièces de l'habitacle, en particulier les panneaux de porte destinés à être contigus à la planche de bord lorsque les portes sont fermées. Or, le décalage qui peut s'ensuivre suivant au moins l'une quelconque des directions verticale, transversale ou longitudinale par référence au véhicule peut être visuellement inesthétique pour les occupants du véhicule. Il est donc particulièrement important d'assurer un positionnement précis de la planche de bord. Cet agencement oblige ainsi, par l'utilisation du centreur, à passer du temps pour ajuster le positionnement de la planche.

Un but de l'invention est donc d'améliorer le positionnement de la planche de bord par rapport à la caisse.

A cet effet, on prévoit selon l'invention un véhicule comprenant :
- une planche de bord ;
- des montants avant ; et
- une traverse inférieure de baie,
la planche étant fixée aux montants en étant positionnée d'une part sur la traverse selon au moins une direction et d'autre part sur les montants selon au moins une autre direction.

Ainsi, en fixant la planche aux montants sans l'intermédiaire de la traverse, on supprime un élément dans la chaîne de cotes et donc un risque de dispersion, de jeu ou de mauvais positionnement. On assure donc un meilleur centrage en position de la planche de bord à l'intérieur de l'habitacle par rapport aux organes adjacents. De plus, il est possible de se passer de centreur, au bénéfice de la réduction du nombre de pièces utilisées dans le véhicule et au bénéfice du temps du montage.

Le véhicule selon l'invention pourra présenter en outre au moins l'une quelconque des caractéristiques suivantes :
- pour chaque montant, la fixation de la planche au montant est agencée pour constituer une référence de position pour la planche suivant une direction de marche longitudinale du véhicule ;
- pour chaque montant, la fixation de la planche au montant est agencée pour constituer une référence de position pour la planche suivant une direction verticale du véhicule ;
- pour chaque montant, la fixation de la planche au montant est agencée pour autoriser un réglage d'une position de la planche par rapport au montant suivant une direction horizontale perpendiculaire à la direction de marche ;
- il comprend des supports fixés aux montants et auxquels la planche est fixée ;
- chaque support présente une face plane, verticale et perpendiculaire à la direction de marche ;
- chaque support présente une face plane horizontale ;
- la planche comprend une zone reliée aux montants par l'intermédiaire de la traverse ;
- la zone est unique ;
- la zone est agencée pour assurer un centrage en position de la planche par rapport à la traverse suivant une direction horizontale perpendiculaire à la direction de marche ;
- la zone est agencée pour autoriser un réglage d'une position de la planche par rapport à la traverse suivant la direction verticale ; et
- l'une parmi la planche et la traverse comprend un pion de positionnement.

On prévoit également selon l'invention un procédé de fixation d'une planche de bord à des montants d'un véhicule, dans lequel on fixe la planche aux montants en positionnant la planche d'une part sur une traverse inférieure de baie.

D'autres caractéristiques et avantages de l'invention apparaîtront encore dans la description suivante d'un mode préféré de réalisation donné à titre d'exemple non limitatif en référence aux dessins annexés sur lesquels :

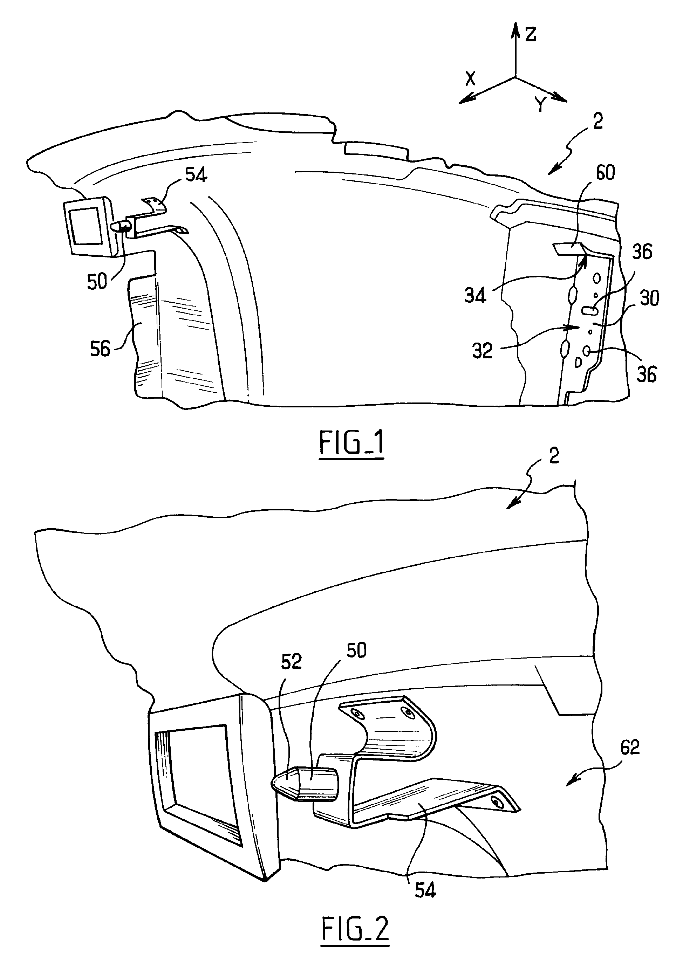

- la figure 1 est une vue en perspective d'une planche de bord selon l'invention ;
- la figure 2 est une vue à plus grande échelle d'un détail de la planche de la figure 1 ;
- la figure 3 est une vue partielle en perspective d'une caisse d'un véhicule destiné à recevoir la planche de la figure 1 ;
- la figure 4 est une vue schématique en coupe verticale dans un plan parallèle à la direction de marche du véhicule montrant la fixation de la planche à la traverse ; et
- les figures 5 et 6 sont deux vues partielles en coupe montrant la fixation de la planche à la caisse du véhicule.

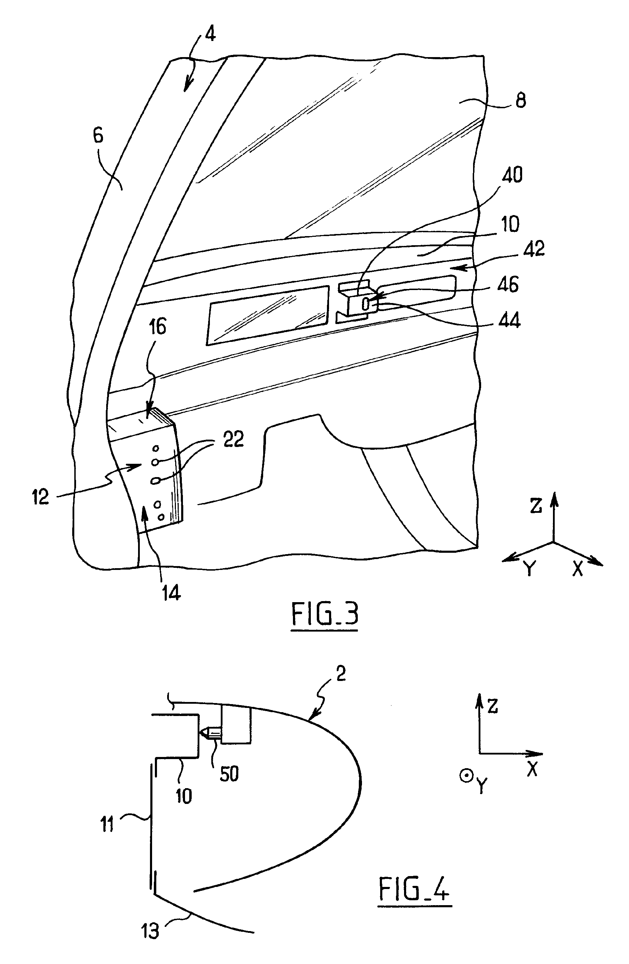

En référence aux figures, dans le présent mode de réalisation de l'invention, le véhicule comprend une planche de bord 2 destinée à être reçue dans une caisse 4 du véhicule illustrée à la figure 3. Cette dernière comprend notamment deux montants avant latéraux 6 respectivement gauche et droit, un seul des deux montants 6 étant visible sur la figure 3. Ces montants se trouvent de part et d'autre d'un pare-brise 8 du véhicule, le long de ses côtés verticaux et à l'avant des ouvertures des portes avant du véhicule.

La caisse comprend également une traverse inférieure de baie 10 s'étendant au-dessous du pare-brise 8.

De façon connue en elle-même, la planche 2 est destinée à comporter un certain nombre d'organes de commande du véhicule tels que boutons, mannettes, indicateurs, écran, etc.

La caisse comprend dans le présent exemple deux supports 12 constitués ici par des boîtiers. Chaque boîtier est directement fixé à l'un respectif des montants 6, sur un côté interne du véhicule, c'est-à-dire du côté intérieur correspondant à l'habitacle. Le ou chaque boîtier présente une face arrière 14 et une face supérieure 16, toutes deux planes. Le boîtier est fixé au montant de sorte que la face 14 est orientée vers l'arrière et s'étend dans un plan vertical perpendiculaire à la direction de marche X du véhicule indiquée sur la figure 3, en référence au repère classique (X, Y, Z) dans lequel la direction X correspond à la direction de marche, la direction Z à la direction verticale et la direction Y à la direction perpendiculaire aux deux précédentes. De même, le boîtier est fixé de sorte que la face supérieure 16 soit orientée vers le haut et s'étende dans un plan horizontal. La paroi portant la face arrière 14 présente des orifices 22.

La planche 2 comprend deux parties 30 constituées par exemple par des flasques 30. Chaque flasque présente une face 32 et, perpendiculaire à celle-ci, une face 34, toutes deux planes. Les flasques 30 constituent ici les extrémités latérales de la planche 2. Sachant que la plus grande dimension de cette planche s'étend suivant la largeur du véhicule, il s'agit des extrémités longitudinales de la planche. Les flasques sont rigidement fixées au reste de la planche et positionnés de sorte que la face 32 s'étend vers l'avant dans un plan vertical perpendiculaire à la direction de marche X. De plus, la face 34 s'étend dans un plan horizontal et est orientée vers le bas. La paroi portant la face 32 présente des orifices 36.

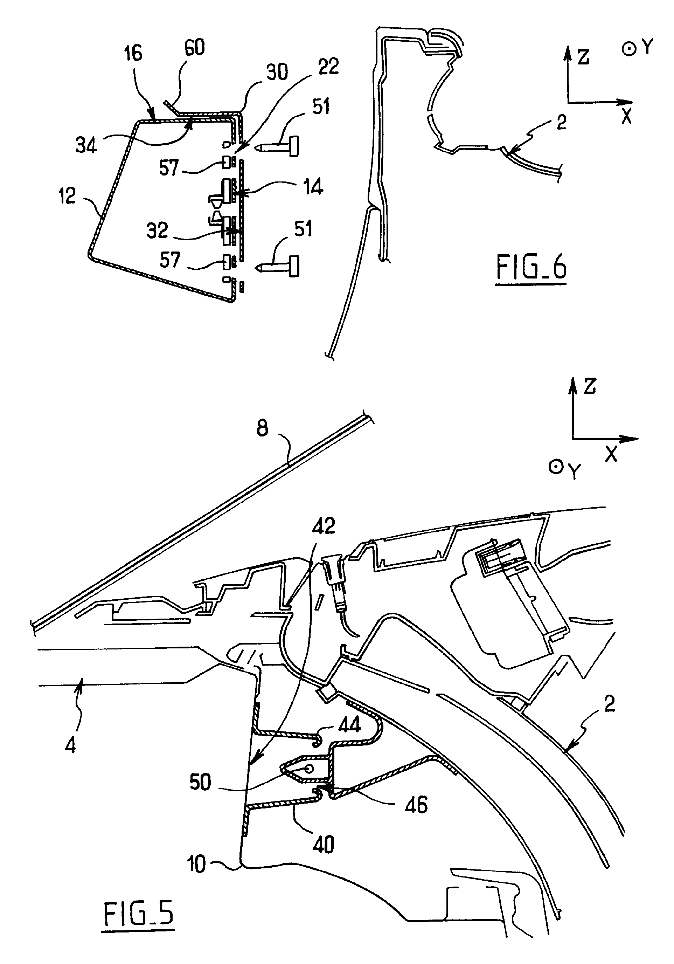

La traverse 10 comprend un support 40 rigidement fixé à une face 42 de la traverse s'étendant dans un plan vertical perpendiculaire à la direction de marche X et orientée vers l'arrière. Le support 40 forme une entretoise et est formé d'une tôle pliée, de sorte qu'une paroi arrière 44 du support s'étend en retrait de la traverse 10, en saillie de celle-ci. La paroi 44 présente un orifice 46 oblong suivant la direction verticale Z. Le support 40 est également visible sur la figure 5 qui représente une section du véhicule dans un plan vertical longitudinal médian, également dénommé « section Y0 » pour l'homme du métier.

En revanche, la section correspondant à la figure 6 est effectuée dans un plan parallèle au plan de section de la figure 5 mais à distance de ce plan médian, dans le plan passant par les passages de roue avant gauche et droite, tel que par exemple un plan se situant à 70 cm de la section médiane.

La planche 2 comprend un pion de centrage ou de positionnement 50 sous la forme d'un doigt cylindrique ayant une extrémité avant conique 52 arrondie au niveau de sa pointe. Le pion 50 est porté par un support 54 lui-même fixé rigidement à la face interne de la planche 2 dans la même section que le support 40 fixé à la traverse 10. Le pion 50 est orienté vers l'avant suivant une direction sensiblement parallèle à la direction de marche X.

Dans ce mode de réalisation, on met en oeuvre le procédé de l'invention de la façon suivante.

On introduit la planche 2 à l'intérieur de l'habitacle de sorte que le pion 50 et les flasques 30 soient orientées vers l'avant et respectivement en regard du support 40 et des boîtiers 12. On amène la planche 2 vers sa position de réception par un mouvement vers l'avant suivant la direction de marche X. Au cours de ce mouvement, le pion 50 pénètre dans l'orifice 46 du support 40 et les flasques 30 viennent en appui contre les boîtiers 12. Précisément, la face 34 vient reposer en appui sur la face 16 du boîtier tandis que la face 32 vient en appui contre la face arrière 14 du boîtier.

Dans cette position, le trou 46 assure un centrage de la position de la planche par rapport à la caisse suivant la largeur Y du véhicule. Il autorise en revanche un débattement de la planche suivant la direction verticale Z et éventuellement suivant la direction de marche X. Il assure donc le centrage de la planche suivant la direction Y.

Par ailleurs, l'appui de la face 34 sur la face 16 au niveau de chaque boîtier assure un positionnement de chaque extrémité de la planche suivant la direction verticale Z tandis que le contact entre les faces 32 et 14 assure un positionnement précis suivant la direction de marche X.

On voit donc que la planche se trouve fixée aux deux montants 6 par l'intermédiaire des boîtiers 12 indépendamment de la traverse 10. On pourra prévoir que, pour chaque montant 6, cette fixation comprend sur le flasque ou le boîtier au moins un trou oblong autorisant un réglage de la position de l'extrémité de la planche par rapport au montant suivant au moins l'une des directions horizontale Y et verticale Z.

Par ailleurs, on voit que la planche est reliée aux montants 6 par l'intermédiaire de la traverse 10 au niveau du support 40. Cette liaison assurée par le pion ou pilote de centrage 50 est unique dans la mesure où ce pion l'est aussi. A ce niveau, on assure un centrage en position de la planche par rapport à la caisse suivant la direction horizontale Y.

La fixation des flasques aux boîtiers 12 respectifs pourra être assurée au moyen de vis 51 coopérant avec des écrous 57.

Comme on le voit sur la figure 4, dans le présent exemple, la traverse 10 est fixée en partie inférieure de la traverse à une cloison 11 formant une séparation entre l'habitacle et le compartiment moteur du véhicule, elle-même reliée en partie inférieure à un plancher 12 du véhicule.

On pourra prévoir que des extrémités avant de la planche 2 comprennent des pattes de guidage 56 s'étendant dans un plan vertical parallèle à la direction X et repliées vers l'avant et vers le plan longitudinal médian du véhicule. Ces pattes facilitent l'insertion de la planche à l'intérieur de la caisse lors de sa mise en place.

L'invention permet de réduire d'un élément la chaîne de cotes assurant le positionnement de la traverse 2 par rapport à la caisse. Le montage de la planche se trouve également simplifié.

On pourra prévoir à l'extrémité avant de la paroi supérieure des flasques 30 portant la face 34 un bord incliné vers le haut 60 formant un avaloire facilitant lui aussi le prépositionnement de la planche au moment de l'assemblage.

Les boîtiers 12 pourront être fixés par soudage aux montants ou pieds 6. Il pourra en être de même pour le support 40 sur la traverse 10. Ce support assurant le centrage latéral de la planche, son positionnement suivant la direction Y devra être particulièrement précis sur la traverse 10. On pourra par exemple fixer l'élément 54 sur la face externe 62 d'un conduit de désembuage intégré dans la planche 2.

Grâce à l'invention, on obtient un positionnement particulièrement précis de la planche 2 par rapport à la caisse, ce qui facilite la maîtrise d'un grand nombre de jeux, en particulier entre la planche 2 et des panneaux de garniture de porte. L'aspect de l'habitacle pour les passagers se trouve amélioré. Cet assemblage permet également de faciliter l'indépendance entre les mises au point des jeux concernant les pièces visibles à l'extérieur du véhicule et celles concernant les pièces visibles à l'intérieur du véhicule.

Bien entendu, on pourra apporter à l'invention de nombreuses modifications sans sortir du cadre de celle-ci.

## Revendications

1. Véhicule comprenant :
- une planche de bord (2) ;
- des montants avant (6) ; et
- une traverse inférieure de baie (10),
**caractérisé en ce que** la planche (2) est fixée aux montants (6) en étant positionnée d'une part sur la traverse (10) selon au moins une direction et d'autre part sur les montants (6) selon au moins une autre direction.

2. Véhicule selon la revendication précédente, **caractérisé en ce que**, pour chaque montant (6), la fixation de la planche au montant est agencée pour constituer une référence de position pour la planche suivant une direction de marche longitudinale (X) du véhicule.

3. Véhicule selon l'une quelconque des revendications précédentes, **caractérisé en ce que**, pour chaque montant (6), la fixation de la planche au montant est agencée pour constituer une référence de position pour la planche suivant une direction verticale (Z) du véhicule.

4. Véhicule selon l'une quelconque des revendications précédentes, **caractérisé en ce que**, pour chaque montant (6), la fixation de la planche (2) au montant est agencée pour autoriser un réglage d'une position de la planche par rapport au montant suivant une direction horizontale (Y) perpendiculaire à la direction de marche (X).

5. Véhicule selon l'une quelconque des revendications précédentes, **caractérisé en ce qu'**il comprend des supports (12) fixés aux montants (6) et auxquels la planche est fixée.

6. Véhicule selon la revendication précédente, **caractérisé en ce que** chaque support (12) présente une face plane (14), verticale et perpendiculaire à la direction de marche (X).

7. Véhicule selon l'une quelconque des revendications 5 ou 6, **caractérisé en ce que** chaque support (12) présente une face plane horizontale (16).

8. Véhicule selon l'une quelconque des revendications précédentes, **caractérisé en ce que** la planche (2) comprend une zone (50) reliée aux montants par l'intermédiaire de la traverse.

9. Véhicule selon la revendication précédente, **caractérisé en ce que** la zone (50) est unique.

10. Véhicule selon l'une quelconque des revendications 8 à 9, **caractérisé en ce que** la zone (50) est agencée pour assurer un centrage en position de la planche par rapport à la traverse suivant une direction horizontale (Y) perpendiculaire à la direction de marche (X).

11. Véhicule selon l'une quelconque des revendications 8 à 10, **caractérisé en ce que** la zone (50) est agencée pour autoriser un réglage d'une position de la planche (2) par rapport à la traverse (10) suivant la direction verticale (Z).

12. Véhicule selon l'une quelconque des revendications précédentes, **caractérisé en ce que** l'une parmi la planche et la traverse comprend un pion (50) de positionnement.

13. Procédé de fixation d'une planche de bord (2) à des montants (6) d'un véhicule, **caractérisé en ce qu'**on fixe la planche (2) aux montants (6) en positionnant la planche d'une part sur une traverse inférieure de baie (10) selon au moins une direction, et d'autre part sur les montants selon au moins une autre direction.
